Europäisches Patentamt

European Patent Office

Office européen des brevets

(19)

(11) Publication number: **0 232 938**
**A1**

# (12) EUROPEAN PATENT APPLICATION

(21) Application number: **87200129.2**

(51) Int. Cl.⁴: **A01K 13/00**

(22) Date of filing: **28.01.87**

(30) Priority: **31.01.86 NL 8600244**
**24.07.86 NL 8601922**

(43) Date of publication of application:
**19.08.87 Bulletin 87/34**

(84) Designated Contracting States:
**BE DE FR GB NL SE**

(71) Applicant: **Liets Agrarische Technieken B.V.**
**Boddenkampstraat 2e-4**
**NL-7514 AZ Enschede(NL)**

(72) Inventor: **Lurvink, Hendricus Antonius Maria**
**Gronausestraat 821-823**
**NL-7534 AC Enschede(NL)**
Inventor: **Meijerink, Gerardus Hendrikus**
**Pastoor van Laakstraat 7**
**NL-7586 CB Overdinkel(NL)**

(74) Representative: **Schumann, Bernard Herman**
**Johan et al**
**OCTROOIBUREAU ARNOLD & SIEDSMA**
**Sweelinckplein 1**
. **NL-2517 GK The Hague(NL)**

(54) **Device for brushing the backs of animals.**

(57) The invention relates to a device (1) for brushing the backs (2) of animals (3), said device (1) comprising two columns (5, 6) extending vertically from the ground (4), and a brace (7) movable up and down by means of two carriers (9) relative to and in the plane of the columns (5, 6), said brace (7) carrying a brush means (8), having a shape adapted to the shape of the backs (2) to be brushed.

It is a purpose of the invention to engineer such a device (1) in such a way that it is perfectly safe, in other words, cannot injure animals even in case of the most unfortunate contact between the animal and the device (1), whilst the device (1) furthermore has to be adapted to be cleansed very easily and has to exhibit an excellent brushing operation under all circumstances.

In order to realize the above purposes the invention generally provides a device (1) of the type described exhibiting the special feature that the brace (7) and the carriers (9) are in the form of one U-shaped bent tube or bar, forming together with the columns a U-shaped port.

Preferably all parts that can be touched by an animal during operation have smooth shapes.

FIG.1

# Device for brushing the backs of animals

The invention relates to a device for brushing the backs of animals, said device comprising two columns extending vertically from the ground, and a brace movable up and down by means of two carriers relative to and in the plane of the columns, said brace carrying a brush means, having a shape adapted to the shape of the backs to be brushed.

Such a device is known among others from US-A-I 581 544, US-A-2 456 197 and US-A-2 333 946.

Such prior art devices comprise a frame to be anchored in the soil, said frame consisting from two vertical columns and a transverse beam connected therewith within which frame a metal brace is shiftable up and down, said metal brace exhibiting a bent shape, being concave in downward direction and carrying brushes. The brace carrying brushes is, in the prior art devices, relatively light and while it is moved upwardly by an animal, particularly a cow, pushing it upwardly spring means are compressed due to which an increasing downwardly directed force is exerted. In order to prevent a sudden fall down of the brace with corresponding potential mechanical damages, noise etcetera, the prior art devices are provided with damping means particularly oil vessels, providing for a viscous damping. The use of oil has, for this application, the disadvantage that the damping is too strong, due to which a fast up and down movement during the brushing of the animal cannot be followed.

The prior art devices furthermore have a number of drawbacks which are so heavy, that the devices in practice are not even usable.

Due to the presence of the bent brace in a fixed frame spaces are present, in which an animal can get wedged with its legs, head, horns, which can cause injuries or even the death of an animal.

Due to the small width of the brushes, i.e. the dimension in the direction in which the animal move itself under the brush, the brushing operation cannot take place with optimum effectiveness, as by the large exerted force the hairs are compressed and there is hardly any or even no brushing effect.

The prior art devices are engineered in such a way that the maximum throw of the brace can be only relatively small, in the order of IO centimetres. This prohibits application in many modern cattle farms, where cattle is present, the shoulder height of which can vary between about I20 centimetres and I60 centimetres.

As a result of the large number of parts, inaccessible corners, extending parts and the like readily contamination and accumulation of germs can take place which cannot be tolerated in a cattle farm.

The prior art devices, even the device according to GB-A-590 342, are constructed of edgy parts and external moving mechanisms, exhibit extending parts, on which animals can wound themselves, such as vertical columns extending next to and over the brace, between which an animal can get wedged as has been explained hereinbefore, and, also due hereto can be cleansed only with difficulty.

It is a purpose of the invention to engineer such a device in such a way that it is perfectly safe, in other words, cannot injure animals even in case of the most unfortunate contact between the animal and the device, whilst the device furthermore has to be adapted to be cleansed very easily and has to exhibit an excellent brushing operation under all circumstances.

In order to realize the above purposes the invention generally provides a device of the type described exhibiting the special feature that the brace and the carriers are in the form of one U-shaped bent tube or bar, forming together with the columns a U-shaped port.

Preferably all parts that can be touched by an animal during operation have smooth shapes.

An advantageous alternative embodiment is characterized by sliding rings serving as sleeve bearings for the carriers relative to the columns and arranged between both and fixed to one of both. This also ensures that the chance of contamination and the accumulation of germs is minimal, whilst the device can also be cleansed readily.

An advantageous further elaboration has the characterizing feature that at the free end of the envelope of a pair consisting of a column and a carrier, at the inner surface thereof, a sliding ring is arranged which also serves as sealing.

Preferably the sliding rings are manufactured of a wear-resistant synthetic resin, e.g. nylon.

The space formed by the columns, the sliding rings, and the U-shaped bent tube or bar serves as an air spring, particularly in the case in which the sliding rings have a good sealing action relative to the columns and/or the tube or bar. This might decelerate the movement of the brace with the brush too much, which might adversely affect the effectivity of the device. In order to be able to realize the most desired movement of the brace that alternative embodiment can find application, in which the space defined by the columns, the sliding rings and the U-shaped bent communicates with the environment through an opening having a small passage. The opening having the small passage in this case also serves as a damping hole. The viscous damping of the air flowing therethrough ensures in case of a good dimensioning a correct spring-and damping characteristic of the device.

After use of long duration of the device the sealing action of the sliding rings relative to the columns can be adversely affected, due to which the air spring action can disappear.

In order to ensure for this case, that in the lowering of the brace no shockwise loading and noise production can occur, that might startle the animals, use can be made of buffer springs serving as a soft stop for the rest position of the brace.

A typical weight of a brace provided with carriers of a device meant for cows is in the order of 60 kg. This weight force is too large for an animal that wants to brush itself and will be experienced as unpleasant. In order to decrease the effective weight force therefore use can be made of pressure springs counteracting the weight force of the brace.

These springs can reduce the effective weight force to, according to this example, about 10 kg. This force is experienced by the animals as pleasant and ensures an excellent brushing action.

Preferably the springs are confined at least partly within the cylindrical space defined by a respective column and/or carrier.

A device according to the invention can be fixed in the bottom permanently. However, it can also be engineered to be movable, at least adapted to be taken up. In this case that embodiment is preferred in which the columns are interconnected by means of a coupling element arranged between their lower ends and that at the lower side of the device at least one clamping strip rotatable in a horizontal plane and fixable by means of a vertical screw is present for fixing the device on a stable floor consisting of planks or concrete beams positioned next to each other with mutual intervals.

For fixing an apparatus provided with more than one clamping strip to such a stable floor in a cow cubicle stable having standardized widths of the planks or beams and their intervals the dimensioning of the clamping strips and their mutual distance(s) have to be chosen in correspondence therewith.

A preferred embodiment has the feature that the brush means extend in a tunnel-like fashion over an appreciable longitudinal distance, i.e. a dimension extending perpendicularly to the main plane of the device.

By this choice the animal finding itself during the use of the device as it were in a tunnel cannot perform a turning movement during the to an fro movement, i.e. the brushing movement, and an optimum brushing effect is ensured. It is this brushing effect that stimulates a more healthy and better functioning skin and giving the animals a pleasant sensation, which in case of milk cattle is very fostering to the milk production and generally the balance of the animals and the peace in a stable.

For orientation: the length of the brush means can e.g. be in the order of magnitude of 50 centimetres. Preferably use is made of stiff brush hairs.

The throw of the brace can be adapted to virtually any requirement in the device according to the invention.

It should be noted that the device according to the invention has to be positioned freely, with a free distance from walls, fences, and other devices in a cow cubicle stable of other walking stable in order to prevent the animals from getting wedged.

The invention will now be explained with reference to the drawing of an arbitrary embodiment. In the drawing:

Fig. 1 is a device for brushing the backs of animals, in operation;

Fig. 2 is the detail II of the brush means according to fig. 1;

Fig. 3 a perspective view, partially broken away and on an enlarged scale of the detail III according to fig. 1; and

Fig. 4 a perspective view, partially broken away, of a detail of an alternative embodiment according to IV in fig. 1.

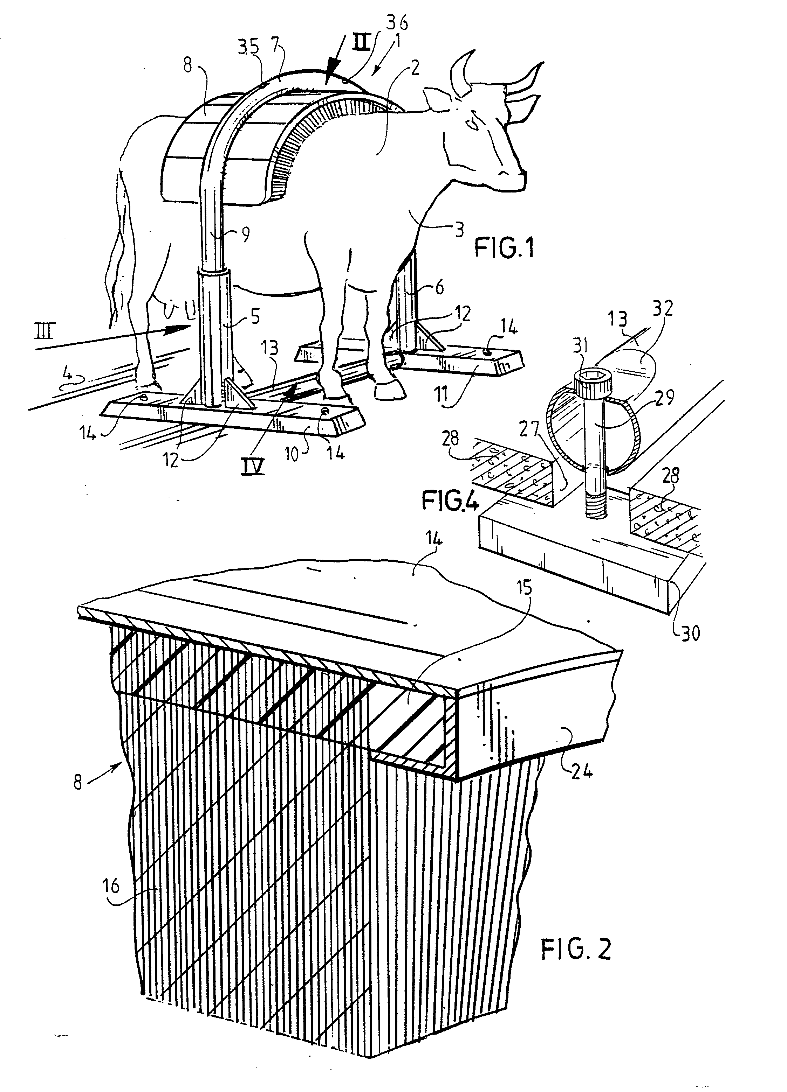

Fig. 1 shows a device 1 for brushing the back 2 of an animal 3, in this case a cow. The device 1 comprises two columns 5, 6 extending vertically from the floor 4, a U-shaped bent tube 7 movable along and in the plane of the columns up and down, said tube 7 carrying a brush means 8 having a bent shape which is adapted to the shape of the back 2 to be brushed. In the present embodiment tube 7 is urged to a lower rest position by its own weight. Tube 7 is carried by two carriers 9 integrated to a unit with the brace and movable relative to the columns in a telescopic fashion.

From fig. 1 it will be clear that the free ends of columns 5, 6 are coupled with each other exclusively through the tube 7 in such a way that the columns 5, 6, the carriers 9 and the tube 7 form together a port.

Columns 5, 6 stand on feet 10, 11, respectively, to which they are welded and they are supported by supports generally indicated with 12.

The brush means 8 extends as a tunnel over an appreciable longitudinal distance, i.e. a dimension extending perpendicularly on the main plane of the device, i.e. the plane determined by columns 5, 6 and tube 7.

In this embodiment the columns are connected with each other by a coupling element 13 arranged between their lower ends.

All parts that can be touched by an animal during operation exhibit a smooth shape.

Fig. 2 shows the construction of the brush means 8. This brush means comprises a bent metal plate 14 fixed to the tube 7 and to which a carrier 15 for brush hairs 16 is fixed by means of a flanged rim 24.

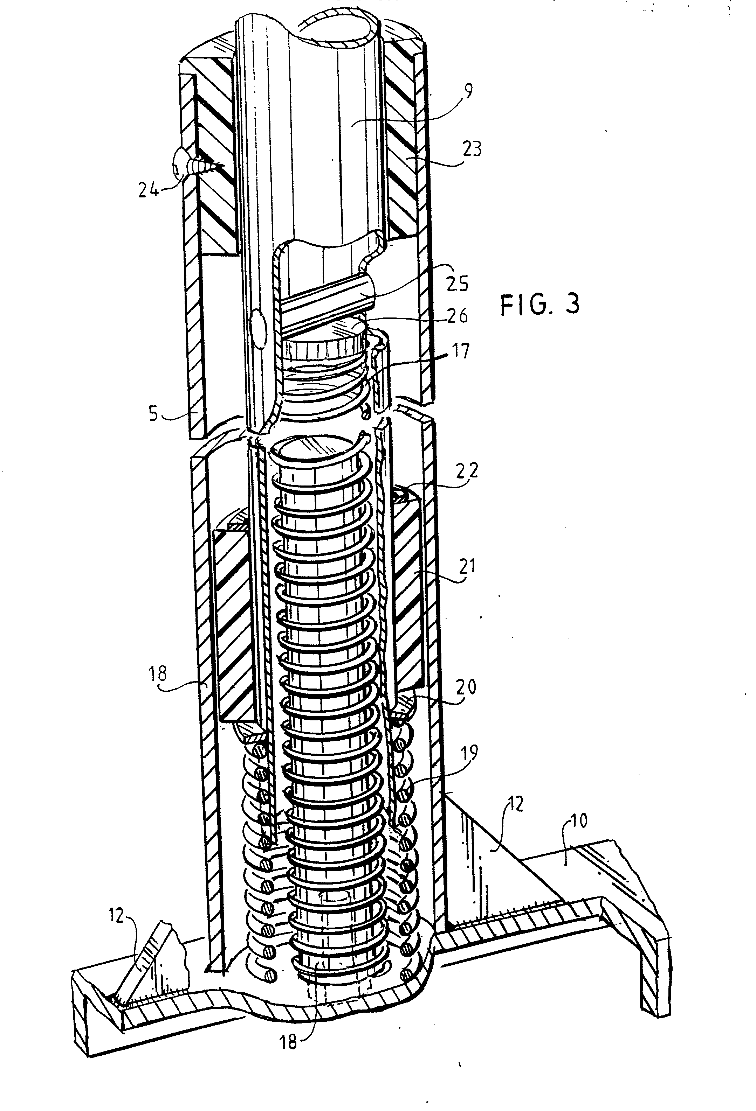

Fig. 3 shows the internal construction of the column 5. Column 6 is constructed in a similar fashion.

The downward force that the brush means 8 has to exert on the back of the animal during operation, consists of the weight force of the tube 7 that is counteracted by the spring force of a spiral spring 17 engineered as a pressure spring and contacting between foot 10 and, by means of a disc 26, bar 25 extending transversely in the carrier 9 between the walls thereof. The spiral spring 17 is entirely confined in the space within column 5. It is even partly confined within the cylindrical space, defined by carrier 9.

Furthermore a buffer spring 19 engineered as a spiral shaped pressure spring is present which serves as a soft stop for the rest position of the carrier 9 and thus tube 7. It is entirely confined in the space defined by column 5. The spring 19 rests with its lower end on the upper surface of foot 10 and co-operates with its other end with a flange 20 fixed to the outer surface of carrier 9. On the flange 20 a nylon sliding ring 21 is arranged that is positioned by a flange 22 at its other end. The outer surface of sliding ring 21 co-operates with a sliding and sealing manner with the inner surface of column 5. Sliding ring 21 does operate as a piston in the cylinder formed by the column. Due to this construction the operation of an air spring is obtained. In order to be able to realize a desired speed of movement in the bent part of tube 7 two holes 35, 36 having a small passage are present. These openings serve as damping holes. The buffer spring 19 will serve as a soft stop only if said air spring does not operate as such or in an insufficient manner, particularly due to wear after a long time of use.

At the upper end of column 5, partly at the inner surface thereof, also a nylon sliding ring 23 is fixed, by means of a screw 24. The inner surface of this sliding ring 23 co-operates in a sliding fashion with the outer surface of carrier 9. In this way a good sealing against dust, dirt and the like of the inner space of column 5 is ensured.

The adapted shape, the flange-shaped broadening of the upper end of the sliding ring 23, ensures a smooth shape in that region.

It should be noted that in the above only a preferred embodiment is described. Many alternative embodiments within the described principle are possible. E.g. a carrier element, in deviation of the embodiment shown, can be shiftable, if desired, not within but over the outer surface of a column.

Fig. 4 shows as an example a possible way of fixation of the device 1 on a stable floor consisting of concrete beams 28 positioned next to each other with intervals 27. The coupling element 13 in this case carries by means of a bolt 29 a clamping strip 30. This strip has a width which is smaller than the interval 27. While positioning the device 1 the clamping strip is put through the interval 27, rotated over about 90° and fixed in a clamping fashion by rotating the bolt 29. The head 31 of the bolt 29 countersunk in a recessed part 32 of the coupling element 31.

## Claims

1. Device for brushing the backs of animals, said device comprising:

two columns extending vertically from the ground, and

a brace movable up and down by means of two carriers relative to and in the plane of the columns, said brace carrying a brush means, having a shape adapted to the shape of the backs to be brushed, characterized in that the brace and the carriers are in the form of one U-shaped bent tube or bar, forming together with the columns a U-shaped port.

2. Device according to claim 1, characterized in that all parts that can be touched by an animal during operation have smooth shapes.

3. Device according to anyone of the preceding claims, characterized by sliding rings serving as sleeve bearings for the carriers relative to the columns and arranged between both and fixed to one of both.

4. Device according to claim 3, characterized in that at the free end of the envelope of a pair consisting of a column and a carrier, at the inner surface thereof, a sliding ring is arranged which also serves as sealing.

5. Device according to claims 3 or 4, <u>character-ized in that</u> the sliding rings are manufactured of a wear-resistant synthetic resin, e.g. nylon.

6. Device according to claims 3, 4 or 5, <u>char-acterized in that</u> the space defined by the columns, the sliding rings and the U-shaped bent communicates with the environment through an opening having a small passage.

7. Device according to anyone of the preceding claims, <u>characterized</u> by buffer springs serving as a soft stop for the rest position of the brace.

8. Device according to anyone of the preceding claims, <u>characterized by</u> pressure springs count-eracting the weight force of the brace.

9. Device according to claims 7 or 8, <u>character-ized in that</u> the springs are confined at least partly within the cylindrical space defined by a respective column and/or carrier.

10. Device according to anyone of the preced-ing claims, <u>characterized in that</u> the columns are interconnected by means of a coupling element arranged between their lower ends and that at the lower side of the device at least one clamping strip rotatable in a horizontal plane and fixable by means of a vertical screw is present for fixing the device on a stable floor consisting of planks or concrete beams positioned next to each other with mutual intervals.

11. Device according to anyone of the preceding claims, <u>characterized in that</u> the brush means ex-tend in a tunnel-like fashion over an appreciable longitudinal distance, i.e. a dimension extending perpendicularly to the main plane of the device.

FIG.1

FIG.4

FIG. 2

12906 - 1p.

0 232 938

FIG. 3

12906 - 1p.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,D | GB-A- 590 342 (SPENCER)<br>* Whole document * | 1 | A 01 K 13/00 |
| A | | 2,11 | |
| | --- | | |
| A,D | US-A-2 456 197 (JENSEN)<br>* Whole document * | 1,7,9 | |
| | --- | | |
| A,D | US-A-1 581 544 (PFLAUM)<br>* Whole document * | 1,7,9 | |
| | --- | | |
| A | DE-A-2 516 076 (JEHLE)<br>* Claim 1; figures 1,2 * | 1,11 | |
| | --- | | |
| A | DE-C- 831 644 (BRUNS)<br>* Claims 1,2,4,5,9; figure 2 * | 7,9 | TECHNICAL FIELDS SEARCHED (Int. Cl.4) |
| | --- | | A 01 K |
| A | GB-A- 425 923 (BROULHIET)<br>* Page 1, lines 8-75; figures 4,5 * | 3,4 | B 60 G<br>F 16 F |
| | --- | | |
| A,D | US-A-2 333 946 (McQUISTAN) | | |
| | --- | | |
| A | FR-A-2 560 002 (LEMENAGER) | | |
| | ----- | | |

The present search report has been drawn up for all claims

| Place of search | Date of completion of the search | Examiner |
|---|---|---|
| THE HAGUE | 06-05-1987 | VON ARX V.U. |